# EUROPEAN PATENT APPLICATION

(11) **EP 4 769 865 A1**
(43) Date of publication of application: **01.07.2026**
(21) Application number: 24902863.0
(22) Date of filing: 11.12.2024
(51) Int. Cl.: H02J 3/32

(54) **ENERGY STORAGE VALVE OPERATION CONTROL METHOD AND APPARATUS, ENERGY STORAGE VALVE SUB-MODULE, AND ENERGY STORAGE SYSTEM**

(30) Priority: 11.12.2023 CN 202311697609
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: YAO, Peng, Shanghai 200241 (CN); ZHAO, Huiwen, Shanghai 200241 (CN); ZHUANG, Yan, Shanghai 200241 (CN); GUO, Zide, Shanghai 200241 (CN); LU, Yanhua, Shanghai 200241 (CN); YU, Dongxu, Shanghai 200241 (CN)
(74) Representative: Gong, Jinping
(86) International application number: PCT/CN2024/138581
(87) International publication number: WO 2025/124445

(57) **Abstract**

This application relates to an energy storage valve operation control method and apparatus, an energy storage valve submodule, an energy storage valve, and an energy storage system. In a case where a fault occurs in the energy storage valve submodule in the energy storage valve, if the faulty energy storage valve submodule fails to be bypassed, the energy storage valve is controlled to be locked first, making a current of the energy storage valve be zero; and further, a switch apparatus is controlled to be opened successfully, a capacitor of a power module withstands a high voltage, changing a working state of a breakover thyristor, thereby enabling the faulty energy storage valve submodule to be successfully bypassed through the breakover thyristor, and controlling the energy storage valve to exit the locked state and enter an operating state.

## Description

### CROSS-REFERENCE TO RELATED APPLICATIONS

This application claims priority to Chinese Patent Application No. 202311697609.4 filed on December 11, 2023 and entitled "ENERGY STORAGE VALVE OPERATION CONTROL METHOD AND APPARATUS, ENERGY STORAGE VALVE SUBMODULE, AND ENERGY STORAGE SYSTEM", which is incorporated herein by reference in its entirety.

### TECHNICAL FIELD

This application relates to the technical field of energy storage, in particular to an energy storage valve operation control method and apparatus, an energy storage valve submodule, an energy storage valve, and an energy storage system.

### BACKGROUND

With the development of science and technology, energy storage systems, as an important power system regulation resource, increasingly bring great convenience to daily production and life in terms of electricity usage. Among various energy storage systems, modular energy storage systems have gradually been applied due to advantages such as high modularity, low grid loss, and good economic benefits. In a modular energy storage system, switching operation of energy storage valve submodules is typically controlled according to an actual operating state. In this process, faulty energy storage valve submodules need to be bypassed for removal.

However, in the related art, when a faulty energy storage valve submodule fails to be bypassed, the entire energy storage valve is shut down, which greatly reduces the operation reliability of the energy storage system.

### SUMMARY

In view of this, it is necessary to provide an energy storage valve operation control method and apparatus, an energy storage valve, and an energy storage system to reduce the possibility of failure of bypass protection for faulty energy storage valve submodules and improve the operation reliability of the energy storage system.

This application provides an energy storage valve operation control method, including: controlling an energy storage valve to be locked in a case where the energy storage valve has a faulty energy storage valve submodule and the faulty energy storage valve submodule fails to be bypassed; sending an opening signal to a switch apparatus of the faulty energy storage valve submodule, where a capacitor of a power module of the faulty energy storage valve submodule is connected to an energy storage module of the faulty energy storage valve submodule through the switch apparatus; and controlling the energy storage valve to operate in a case where the switch apparatus is opened successfully and the faulty energy storage valve submodule is successfully bypassed through a breakover thyristor, where the breakover thyristor is connected in parallel with a bypass switch of the power module.

In the above energy storage valve operation control method, the breakover thyristor is connected in parallel with the bypass switch of the power module of the energy storage valve submodule in the energy storage valve, and the power module is connected to the energy storage valve module through the switch apparatus. In a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus is controlled to be opened successfully, so that the capacitor of the power module withstands a high voltage, changing a working state of the breakover thyristor, thereby enabling the faulty energy storage valve submodule to be successfully bypassed through the breakover thyristor, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor to protect the faulty energy storage valve submodule, without directly shutting down the entire energy storage valve. In this way, when there is a faulty energy storage valve submodule, the possibility of failure of bypass protection for the faulty energy storage valve submodule can be greatly reduced, the phenomenon of shutdown of the entire energy storage valve can be alleviated, and the operation reliability of the energy storage system can be effectively improved.

In some embodiments, the controlling the energy storage valve to operate in a case where the faulty energy storage valve submodule is successfully bypassed through a breakover thyristor includes: controlling the energy storage valve to operate in a case where the breakover thyristor of the faulty energy storage valve submodule is passively broken down.

In the above solution, a voltage across two terminals of the breakover thyristor is increased by opening the switch apparatus, so that the breakover thyristor is passively broken down to make the two terminals of the breakover thyristor short-circuited, achieving a bypass function of the faulty energy storage valve submodule, thereby achieving the advantages of simple implementation and high bypass efficiency.

In some embodiments, the passive breakdown of the breakover thyristor of the faulty energy storage valve submodule includes: acquiring a voltage parameter across two terminals of the breakover thyristor of the faulty energy storage valve submodule in a case where the switch apparatus is opened; determining that the breakover thyristor is passively broken down in a case where the voltage parameter changes to zero within a preset duration; and determining that the breakover thyristor is not passively broken down in a case where the voltage parameter does not change to zero within the preset duration.

In the above solution, whether the breakover thyristor is passively broken down is determined by detecting whether the voltage parameter across the two terminals of the breakover thyristor changes to zero within the preset duration, achieving high detection efficiency and detection accuracy.

In some embodiments, after the controlling an energy storage valve to be locked in a case where the energy storage valve has a faulty energy storage valve submodule and the faulty energy storage valve submodule fails to be bypassed, the method further includes: executing the step of sending an opening signal to a switch apparatus of the faulty energy storage valve submodule in a case where the energy storage valve is locked successfully; and controlling the energy storage valve to be shut down in a case where the energy storage valve fails to be locked.

In the above solution, after the energy storage valve is controlled to be locked, it is further necessary to detect whether the energy storage valve is locked successfully, and opening control of the switch apparatus is executed in a case where the energy storage valve is locked successfully, improving the opening reliability of the switch apparatus.

In some embodiments, after the sending an opening signal to a switch apparatus of the faulty energy storage valve submodule, the method further includes: controlling the energy storage valve to be shut down in a case where the switch apparatus is opened successfully and the faulty energy storage valve submodule fails to be successfully bypassed through the breakover thyristor.

In the above solution, in a case where the switch apparatus is opened successfully, whether the faulty energy storage valve submodule can be bypassed through the breakover thyristor is further detected, and when it still fails to be bypassed through the breakover thyristor, the energy storage valve is controlled to be shut down, reducing the possibility of further expansion of the fault of the energy storage valve.

In some embodiments, after the sending an opening signal to a switch apparatus of the faulty energy storage valve submodule, the method further includes: controlling the energy storage valve to be shut down in a case where the switch apparatus fails to be opened.

In the above solution, the energy storage valve is directly controlled to be shut down in a case where the switch apparatus fails to be opened, reducing the possibility of further expansion of the fault of the energy storage valve.

In some embodiments, the controlling an energy storage valve to be locked in a case where the energy storage valve has a faulty energy storage valve submodule and the faulty energy storage valve submodule fails to be bypassed includes: controlling a power switch apparatus connected in parallel with the bypass switch in the power module of the faulty energy storage valve submodule to be turned on in a case where the energy storage valve has a faulty energy storage valve submodule; controlling the bypass switch to be closed in a case where the power switch apparatus fails to be turned on; and controlling the energy storage valve to be locked in a case where the bypass switch fails to be closed.

In the above solution, in a case where a faulty energy storage valve submodule occurs in the energy storage valve, the power switch apparatus connected in parallel with the bypass switch is first controlled to be turned on to bypass the faulty energy storage valve submodule; if the power switch apparatus fails to be turned on, the bypass switch is controlled to be closed to bypass the faulty energy storage valve submodule; and in a case where the bypass switch also fails to implement the bypass, the breakover thyristor is enabled for bypass. In this way, multi-level protection can be provided for the bypass of the energy storage valve submodule, improving the bypass success rate of the energy storage valve submodule.

This application further provides an energy storage valve operation control apparatus, including: an operation control module, configured to control an energy storage valve to be locked in a case where the energy storage valve has a faulty energy storage valve submodule and the faulty energy storage valve submodule fails to be bypassed; and an opening control module, configured to send an opening signal to a switch apparatus of the faulty energy storage valve submodule; where a capacitor of a power module of the faulty energy storage valve submodule is connected to an energy storage module of the faulty energy storage valve submodule through the switch apparatus. The operation control module is further configured to control the energy storage valve to operate in a case where the switch apparatus is opened successfully to enable the faulty energy storage valve submodule to be successfully bypassed through the breakover thyristor, where the breakover thyristor is connected in parallel with a bypass switch of the power module.

This application further provides an energy storage valve submodule, including a controller, a power module, an energy storage module, and a switch apparatus. The power module includes a capacitor, a bypass switch, a breakover thyristor, as well as a first power switch apparatus and a second power switch apparatus connected in series. The bypass switch is connected in parallel with the first power switch apparatus. The breakover thyristor is connected in parallel with the bypass switch. Two terminals of the breakover thyristor are respectively cascaded with adjacent energy storage valve submodules. A terminal of the first power switch apparatus away from the second power switch apparatus is connected to a first terminal of the capacitor. A terminal of the second power switch apparatus away from the first power switch apparatus is connected to a second terminal of the capacitor. The first terminal and the second terminal of the capacitor are respectively connected to the energy storage module through the switch apparatus. The first power switch apparatus, the bypass switch, and the switch apparatus are respectively connected to the controller. The controller is configured to control the switch apparatus to be opened in a case where the energy storage valve submodule has a fault and the faulty energy storage valve submodule fails to be bypassed, to make the faulty energy storage valve submodule be bypassed through the breakover thyristor.

In the above energy storage valve submodule, in a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus is controlled to be opened successfully, so that a capacitor of the power module withstands a high voltage, changing a working state of the breakover thyristor, thereby enabling the faulty energy storage valve submodule to be successfully bypassed through the breakover thyristor, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor to protect the energy storage valve submodule, thereby improving the operating safety of the energy storage valve submodule.

In some embodiments, the switch apparatus includes a drive assembly, a first switch assembly, and a second switch assembly. The drive assembly is respectively connected to the first switch assembly and the second switch assembly. The first terminal of the capacitor is connected to the energy storage module through the first switch assembly, and the second terminal of the capacitor is connected to the energy storage module through the second switch assembly.

In the above solution, a double-switch type switch apparatus is provided between the power module and the energy storage module, to achieve reliable isolation between the power module and the energy storage module, effectively reducing the implementation cost of bypass protection for the energy storage valve submodule.

This application further provides an energy storage valve, including an energy storage valve control apparatus and the cascaded energy storage valve submodules described above, where a controller of each of the energy storage valve submodules is connected to the energy storage valve control apparatus.

This application further provides an energy storage system, including a converter valve and the above energy storage valve.

### BRIEF DESCRIPTION OF DRAWINGS

To more clearly illustrate the technical solutions of embodiments of this application, the drawings to be used in the embodiments of this application are briefly introduced below. Obviously, the drawings described below are only some embodiments of this application. For those of ordinary skill in the art, other drawings can be obtained based on these drawings without creative effort. In the drawings:
FIG. 1 is a schematic structural diagram of an energy storage valve submodule according to some embodiments of this application;
FIG. 2 is a schematic flowchart of an energy storage valve operation control method according to some embodiments of this application;
FIG. 3 is a schematic flowchart of an energy storage valve operation control method according to some other embodiments of this application;
FIG. 4 is a schematic flowchart of an energy storage valve operation control method according to still some other embodiments of this application;
FIG. 5 is a schematic flowchart of locking control of an energy storage valve according to some embodiments of this application;
FIG. 6 is a schematic flowchart of locking control of an energy storage valve according to some other embodiments of this application;
FIG. 7 is a schematic flowchart of an energy storage valve operation control method according to yet some other embodiments of this application; and
FIG. 8 is a schematic structural diagram of an energy storage valve operation control apparatus according to some embodiments of this application.

Description of reference numerals in the drawings: D. breakover thyristor, K. bypass switch, T1. first power switch apparatus, T2. first power switch apparatus, C. capacitor, 101. power module, 103. switch apparatus, and 105. energy storage module.

### DESCRIPTION OF EMBODIMENTS

The embodiments of the technical solutions of this application are described in detail below with reference to the drawings. The following embodiments are only used to illustrate the technical solutions of this application more clearly and thus serve as only examples, and cannot be used to limit the protection scope of this application.

Unless otherwise defined, all technical and scientific terms used herein have the same meaning as commonly understood by those of ordinary skill in the art to which this application belongs. The terms used herein are only for the purpose of describing specific embodiments and are not intended to limit this application. The terms "include", "comprise", "have", and any variations thereof in the specification and claims of this application and the above description of the drawings are intended to cover non-exclusive inclusions.

In the description of the embodiments of this application, the technical terms "first", "second", and the like are only used to distinguish between different objects and should not be understood as indicating or implying relative importance or implicitly indicating the number, specific order, or primary-secondary relationship of the indicated technical features. In the description of the embodiments of this application, "multiple" means two or more, unless otherwise specifically defined.

The reference to "embodiment" herein means that a specific feature, structure, or characteristic described in connection with this embodiment can be included in at least one embodiment of this application. The appearance of the phrase in various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of the embodiments of this application, the term "and/or" is merely an association relationship describing associated objects, indicating that three relationships may exist. For example, A and/or B may indicate: only A exists, both A and B exist, and only B exists. In addition, the character "/" in this text generally indicates that the contextually associated objects are in an "or" relationship.

In the description of the embodiments of this application, the term "multiple" refers to two or more (including two). Similarly, "multiple groups" refers to two or more groups (including two groups), and "multiple pieces" refers to two or more pieces (including two pieces).

In the description of the embodiments of this application, unless otherwise clearly specified and limited, the technical terms such as "mounting", "join", "connection", and "fastening" should be understood in a broad sense. For example, they may be fixed connection, detachable connection, or integration; they may be mechanical connection or electrical connection; they may be direct connection, or indirect connection through an intermediate medium; or they may be be internal communication between two elements or an interaction relationship between two elements. For those of ordinary skill in the art, the specific meanings of the above terms in the embodiments of this application can be understood according to specific situations.

At present, from the development of the market situation, the application of energy storage systems is becoming increasingly widespread, bringing great convenience to daily production and life in terms of electricity usage. Modular energy storage systems, due to their highly modular structure, can meet the needs of high efficiency, high reliability, economical efficiency, and safety, and are gradually developed and applied.

In a modular energy storage system, an energy storage valve is constructed by cascading energy storage valve submodules with a modular structure. Based on actual operational requirements, an energy storage valve control apparatus may be used to control the energy storage valve submodules of the energy storage valve to be put into operation or taken out of operation. Furthermore, when each energy storage valve submodule is put into operation, continuous fault monitoring can be performed on each energy storage valve submodule. In a case where a fault occurs in an energy storage valve submodule, the faulty energy storage valve submodule can be bypassed for removal by closing a bypass switch of the energy storage valve submodule or turning on a power switch tube connected in parallel with the bypass switch, thereby protecting the faulty energy storage valve submodule.

However, due to the complex power environment in which the energy storage system is located, in actual operating scenarios, the bypass switch or power switch tube of the energy storage valve submodule usually fails to act or acts unsuccessfully. In this case, to alleviate the phenomenon of more serious faults caused by continued operation of the faulty energy storage valve submodule or affecting the reliable operation of the energy storage system, the energy storage valve where the faulty energy storage valve submodule is located is usually directly shut down. The reliability of current bypass protection methods for faulty energy storage valve submodules is poor, which easily causes unnecessary shutdown of the energy storage system due to faults in the energy storage valve submodule, greatly reducing the operation reliability of the energy storage system.

To alleviate the above phenomenon, it has been found through research that another level of bypass protection can be additionally provided in the energy storage valve submodule, and in a case where the bypass switch and the power switch tube connected in parallel with the bypass switch both fail to implement the bypass, the bypass function of the energy storage valve submodule can also be achieved through the additionally provided level of protection, thereby removing the faulty energy storage valve submodule for protection.

Based on the above considerations, with reference to the electrical distribution of the energy storage valve submodule in actual operating scenarios, a breakover thyristor may be connected in parallel with the bypass switch. In a case where the energy storage valve submodule has no fault, the breakover thyristor does not affect the normal operation of the energy storage valve submodule, and in a case where the energy storage valve submodule has a fault, the faulty energy storage valve submodule can be bypassed through the breakover thyristor by changing a working state of the breakover thyristor.

Based on this, in the solution of the embodiments of this application, a breakover thyristor is connected in parallel with the bypass switch of the power module of the energy storage valve submodule, and the power module is connected to the energy storage valve module through a switch apparatus. In a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus is controlled to be opened successfully, so that a capacitor of the power module withstands a high voltage, changing a working state of the breakover thyristor, thereby enabling the faulty energy storage valve submodule to be successfully bypassed through the breakover thyristor, and controlling the energy storage valve to exit the locked state and enter an operating state.

Through the above solution, in a case where the faulty energy storage valve submodule fails to be bypassed, the bypass of the faulty energy storage valve submodule can be further achieved through the breakover thyristor to protect the faulty energy storage valve submodule, without directly shutting down the entire energy storage valve. In this way, when there is a faulty energy storage valve submodule, the possibility of failure of bypass protection for the faulty energy storage valve submodule can be greatly reduced, the phenomenon of shutdown of the entire energy storage valve can be alleviated, and the operation reliability of the energy storage system can be effectively improved.

The energy storage valve operation control method provided by the embodiments of this application is applied in an energy storage valve of a modular energy storage system. The energy storage valve includes an energy storage valve control apparatus and multiple cascaded energy storage valve submodules. Each energy storage valve submodule is switched under the control of the energy storage valve control apparatus and a respective submodule control board. In addition, the energy storage valve can also be controlled to enter different operating states such as locking or shutdown through the energy storage valve control apparatus.

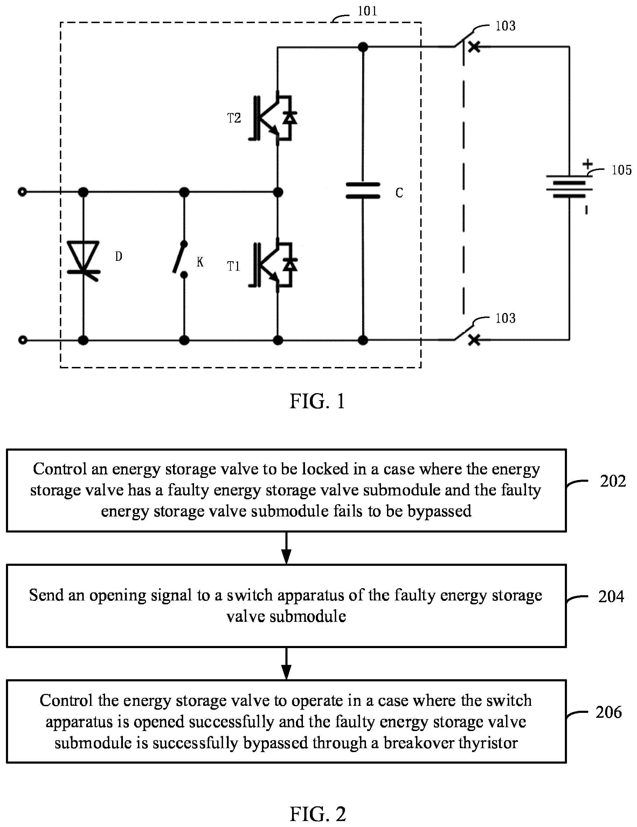

Referring to FIG. 1, each energy storage valve submodule in the energy storage valve includes a power module 101, an energy storage module 105, and a switch apparatus 103. The power module 101 and the energy storage module 105 are connected through the switch apparatus 103, and can be isolated through opening of the switch apparatus 103. The power module 101 further includes a power circuit, a bypass switch K, a breakover thyristor D, and a capacitor C. The power circuit includes two power switch tubes connected in series (which are T1 and T2 as shown in the figure). Two terminals of one power switch tube (T1) serve as alternating-current terminals of the power circuit, and the bypass switch K and the breakover thyristor D are sequentially connected in parallel with the alternating-current terminals. Two terminals formed after the two power switch tubes are connected in series serve as direct-current terminals of the power circuit, a capacitor C is connected in parallel with the direct-current terminals, and two terminals of the capacitor C are respectively connected to the energy storage module 105 through the switch apparatus 103.

In some embodiments, the energy storage valve submodule further includes a submodule control board, a power switch drive board, and a bypass switch drive board. The submodule control board is respectively in communication connection with the energy storage valve control apparatus, the power switch drive board, and the bypass switch drive board, to construct a control system to control operation such as switching of the energy storage valve submodule.

It can be understood that the type of the modular energy storage system in the embodiments of this application is not unique. In some embodiments, it may be a high-voltage direct-current direct-hung energy storage system, and in some other embodiments, it may be a medium-low-voltage energy storage system, which is not specifically limited. To facilitate understanding of the technical solution of this application, in the following embodiments, it is understood that the energy storage valve operation control method is applied in a high-voltage direct-current direct-hung type of modular energy storage systems.

Referring to FIG. 2, this application provides an energy storage valve operation control method. The method includes Step 202, Step 204, and Step 206.

Step 202: Control an energy storage valve to be locked in a case where the energy storage valve has a faulty energy storage valve submodule and the faulty energy storage valve submodule fails to be bypassed.

The energy storage valve is an apparatus formed by cascading multiple energy storage valve submodules and having power energy storage and access functions. The energy storage valve submodule is the smallest modular unit that achieves power energy storage and access in a system. The faulty energy storage valve submodule is an energy storage valve submodule that has a fault and needs to be removed for protection. Locking is a state in which, while the energy storage valve remains connected to the grid, the current of the energy storage valve is controlled to drop to zero.

Referring to FIG. 1, the energy storage valve submodule in some embodiments of this application includes a power module 101, an energy storage module 105, and a switch apparatus 103. The power module 101 includes a capacitor C, a bypass switch K, a breakover thyristor D, as well as a first power switch apparatus T1 and a second power switch apparatus T2 connected in series. The bypass switch K is connected in parallel with the first power switch apparatus T1. The breakover thyristor D is connected in parallel with the bypass switch K. Two terminals of the breakover thyristor D are respectively cascaded with adjacent energy storage valve submodules. A terminal of the first power switch apparatus T1 away from the second power switch apparatus T2 is connected to a first terminal of the capacitor C, and a terminal of the second power switch apparatus T2 away from the first power switch apparatus T1 is connected to a second terminal of the capacitor C. The first terminal and the second terminal of the capacitor C are respectively connected to the energy storage module 105 through the switch apparatus 103.

In the energy storage valve submodule with this structure, if the energy storage valve control apparatus detects that a certain energy storage valve submodule has a fault, an bypass operation may be implemented through the first power switch apparatus and/or the bypass switch, and in a case where the first power switch apparatus and/or the bypass switch fails to implement the bypass, it is considered that the faulty energy storage valve submodule fails to be bypassed, and in this case, the energy storage valve is locked, to reduce the possibility of accidents caused by continued operation of the energy storage valve.

It should be noted that the manner in which the energy storage valve control apparatus controls the energy storage valve to be locked is not unique. In some embodiments, the current of the energy storage valve is reduced to zero by controlling related devices in the energy storage valve, thereby achieving locking of the energy storage valve. In actual scenarios, a specific manner for reducing the current of the energy storage valve to zero is not limited, which may be achieved by controlling the operation of a circuit breaker or contactor between the energy storage valve and an alternating-current bus of the energy storage system.

Step 204: Send an opening signal to a switch apparatus of the faulty energy storage valve submodule.

The capacitor of the power module of the faulty energy storage valve submodule is connected to the energy storage module of the faulty energy storage valve submodule through the switch apparatus. The switch apparatus is a switch apparatus provided in a busbar cabinet between the power module and the energy storage valve module of the energy storage valve and configured to isolate the power module from the energy storage module. In the solution of these embodiments, in a case where both the bypass switch and/or the power switch apparatus connected in parallel with the bypass switch fail to implement the bypass, the energy storage valve control apparatus controls the energy storage valve to be locked. In this case, the switch apparatus meets an operating condition, the energy storage valve control apparatus sends an opening signal to a submodule control board of the faulty energy storage valve submodule, and the submodule control board further transmits the opening signal to the switch apparatus to control the switch apparatus to be opened, that is, to control the switch apparatus to disconnect the energy storage module from the power module, thereby electrically isolating the power module from the energy storage module.

It should be noted that a specific type of the switch apparatus is not unique, as long as the switch apparatus has an opening function to disconnect the power module from the energy storage module. For example, in some embodiments, the switch apparatus includes a disconnect switch. To be specific, a disconnect switch is provided between the power module and the energy storage module, and the power module is isolated from the energy storage module through opening of the disconnect switch. In other embodiments, the switch apparatus may alternatively be a solid-state circuit breaker or the like, which is not specifically limited.

Step 206: Control the energy storage valve to operate in a case where the switch apparatus is opened successfully and the faulty energy storage valve submodule is successfully bypassed through the breakover thyristor.

The breakover thyristor is connected in parallel with the bypass switch of the power module. The breakover thyristor is a breakover diode, also known as a reverse blocking two-terminal thyristor or a Shockley diode, which is a unidirectional switch diode capable of implementing forward switching operation and can achieve breakover connection when a forward voltage reaches a rated value.

In the solution of these embodiments, the breakover thyristor is connected in parallel with two terminals of the bypass switch, and the two terminals of the breakover thyristor may be regarded as alternating-current terminals of the energy storage valve submodule, respectively cascaded with adjacent energy storage valve submodules. Therefore, by making the breakover thyristor enter a specific working state (equivalent to a short-circuit state), current can flow across the two terminals of the breakover thyristor without flowing to a rear-end power switch apparatus or the like, thereby achieving the same bypass function as the bypass switch.

In a case where the switch apparatus is controlled to be opened successfully, a voltage across the two terminals the capacitor of the power module rises rapidly and is applied to the breakover thyristor, changing a working state of the breakover thyristor. Ultimately, the faulty energy storage valve submodule is successfully bypassed through the breakover thyristor, the faulty energy storage valve submodule is removed from the current energy storage valve, and the faulty energy storage valve submodule does not affect the energy storage valve. As a result, in this case, the energy storage valve control apparatus controls the energy storage valve to exit the locked state and switch to the operating state, where the controlling the energy storage valve to operate refers to controlling the energy storage valve to exit the locked state, so that the architecture obtained after the faulty energy storage valve submodule is removed is put into the energy storage valve to continue operating.

In the above energy storage valve operation control method, a breakover thyristor is connected in parallel with the bypass switch of the power module of the energy storage valve submodule in the energy storage valve, and the power module is connected to the energy storage valve module through the switch apparatus. In a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus is controlled to be opened successfully, so that the capacitor of the power module withstands a high voltage, changing a working state of the breakover thyristor, thereby enabling the faulty energy storage valve submodule to be successfully bypassed through the breakover thyristor, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor to protect the faulty energy storage valve submodule, without directly shutting down the entire energy storage valve. In this way, when there is a faulty energy storage valve submodule, the possibility of failure of bypass protection for the faulty energy storage valve submodule can be greatly reduced, the phenomenon of shutdown of the entire energy storage valve can be alleviated, and the operation reliability of the energy storage system can be effectively improved.

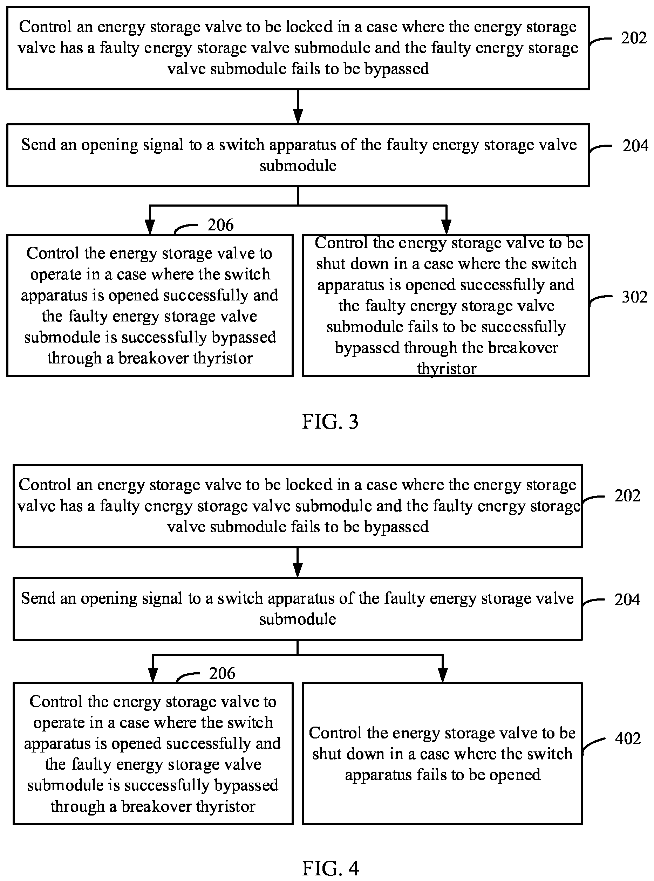

Referring to FIG. 3, in some embodiments, after Step 204, the method further includes Step 302.

Step 302: Control the energy storage valve to be shut down in a case where the switch apparatus is opened successfully and the faulty energy storage valve submodule fails to be successfully bypassed through the breakover thyristor.

In the solution of these embodiments, after the switch apparatus is opened successfully, the energy storage valve control apparatus further monitors the faulty energy storage valve submodule. In actual operating scenarios, due to reasons such as capacitor fault or short circuiting between the capacitor and the breakover thyristor, there may be a phenomenon that the faulty energy storage valve submodule cannot be bypassed through the breakover thyristor even if the switch apparatus is opened successfully. In this case, similarly, to improve the operating safety of the energy storage valve and reduce the risk brought by operation with fault of the faulty energy storage valve submodule, the energy storage valve control apparatus controls the energy storage valve to be shut down.

In the above solution, in a case where the switch apparatus is opened successfully, whether the faulty energy storage valve submodule can be bypassed through the breakover thyristor, and when faulty energy storage valve submodule still cannot be bypassed through the breakover thyristor, the energy storage valve is controlled to be shut down, reducing the possibility of further expansion of the fault of the energy storage valve.

In some embodiments, the controlling the energy storage valve to operate in a case where the faulty energy storage valve submodule is successfully bypassed through the breakover thyristor includes: controlling the energy storage valve to operate in a case where the breakover thyristor of the faulty energy storage valve submodule is passively broken down.

In the solution of these embodiments, the faulty energy storage valve submodule is bypassed through the breakover thyristor by passively breaking down the breakover thyristor. In other embodiments, the bypass function may alternatively be achieved through the breakover thyristor by short circuiting of the thyristor based on commutation failure of the breakover thyristor, which is not specifically limited. The commutation failure of the breakover thyristor means that the breakover thyristor fails to be normally recovered to an off state in a forward on state, which is usually caused by reasons such as excessively long turn-off time of the switch, excessively large current and excessively large voltage. Therefore, in the solution of these embodiments, in a case where the switch apparatus is opened successfully to increase the voltage across the two terminals of the breakover thyristor, a corresponding pulse is outputted to control the breakover thyristor to implement commutation, which causes commutation failure of the breakover thyristor and makes the breakover thyristor enter a short-circuit state.

Referring to FIG. 1, in the solution of these embodiments, after the switch apparatus is opened successfully, the first power switch apparatus cannot be turned on normally, the second power switch apparatus is controlled to enter an on state, the voltage across the two terminals of the capacitor rises rapidly and is applied to the breakover thyristor, so that the voltage across the two terminals of the breakover thyristor rises rapidly, and in a case where the breakdown voltage of the breakover thyristor is reached, the breakover thyristor is broken down. In this case, the two terminals of the breakover thyristor can be regarded as being in a short-circuit state, so the energy storage valve submodule where the breakover thyristor is located can be bypassed.

In the above solution, the voltage across the two terminals of the breakover thyristor is increased by opening of the switch apparatus, so that the two terminals of the breakover thyristor are short-circuited by passively breaking down the breakover thyristor, achieving the bypass function of the faulty energy storage valve submodule, thereby achieving the advantages of simple implementation and high bypass efficiency.

In some embodiments, the passive breakdown of the breakover thyristor of the faulty energy storage valve submodule includes: acquiring a voltage parameter across the two terminals of the breakover thyristor in a case where the disconnect switch is opened; determining that the breakover thyristor is passively broken down in a case where the voltage parameter changes to zero within a preset duration; and determining that the breakover thyristor is not passively broken down in a case where the voltage parameter does not change to zero within the preset duration.

In a case where the breakover thyristor is broken down, the two terminals of the breakover thyristor are equivalent to being short-circuited, in this case, there is no voltage drop across the two terminals of the breakover thyristor, that is, the voltage parameter across the two terminals of the breakover thyristor is zero. Therefore, whether the breakover thyristor is passively broken down may be determined by acquiring the voltage parameter across the two terminals of the breakover thyristor and determining whether the voltage parameter changes to zero within the preset duration.

It can be understood that in other embodiments, whether the breakover thyristor is passively broken down may alternatively be determined by monitoring a magnitude of the current flowing through the breakover thyristor, monitoring a temperature of the breakover thyristor, or the like, which is not specifically limited.

It should be noted that the manner for acquiring the voltage parameter across the two terminals of the breakover thyristor is not unique. In some embodiments, voltage detection components, such as voltage transformers, may be provided at the two terminals of the breakover thyristor to collect the voltage across the two terminals of the breakover thyristor and send the voltage to the energy storage valve control apparatus. The value of the preset duration is not unique, and it can be set just in combination with the actual operating scenario of the energy storage valve submodule to ensure that the breakover thyristor can complete breakdown within the preset duration. For example, in some embodiments, the preset duration can be set to be less than or equal to 10 ms (milliseconds).

In the above solution, whether the breakover thyristor is passively broken down is determined by detecting whether the voltage parameter across the two terminals of the breakover thyristor changes to zero within the preset duration, which achieves high detection efficiency and detection accuracy.

Referring to FIG. 4, in some embodiments, after Step 204, the method further includes Step 402.

Step 402: Control the energy storage valve to be shut down in a case where the switch apparatus fails to be opened.

In the solution of these embodiments, after the energy storage valve control apparatus sends an opening signal to the switch apparatus, due to reasons such as communication failure, the switch apparatus fails to achieve the opening function according to the opening signal, that is, the switch apparatus fails to be opened. In this case, to improve the operating safety of the energy storage valve and reduce the risk brought by the operation with fault of the faulty energy storage valve submodule, the energy storage valve control apparatus controls the energy storage valve to be shut down.

Through the solution of these embodiments, four-level protection measures are provided for the faulty energy storage valve submodule through turn-on of the power switch apparatus, closing of the bypass switch, breakdown of the breakover thyristor, and shutdown of the energy storage valve, farthest reducing the possibility of the faulty energy storage valve submodule continuing to be put into operation without shutting down the energy storage valve. Alternatively, three-level protection measures are provided for the faulty energy storage valve submodule through turn-on of the power switch apparatus, breakdown of the breakover thyristor, and shutdown of the energy storage valve. Alternatively, three-level protection measures are provided for the faulty energy storage valve submodule through closing of the bypass switch, breakdown of the breakover thyristor, and shutdown of the energy storage valve. Selection can be specifically made according to actual needs.

In the above solution, in a case where the switch apparatus fails to be opened, the energy storage valve is directly controlled to be shut down, reducing the possibility of further expansion of the fault of the energy storage valve.

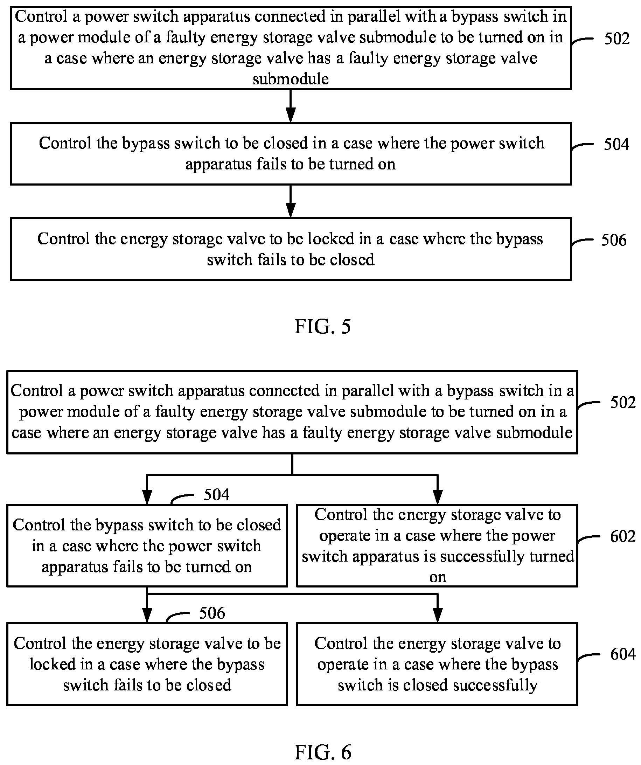

Referring to FIG. 5, in some embodiments, Step 202 includes Step 502, Step 504, and Step 506.

Step 502: Control a power switch apparatus connected in parallel with the bypass switch in the power module of the faulty energy storage valve submodule to be turned on in a case where the energy storage valve has a faulty energy storage valve submodule.

Step 504: Control the bypass switch to be closed in a case where the power switch apparatus fails to be turned on.

Step 506: Control the energy storage valve to be locked in a case where the bypass switch fails to be closed.

In the solution of these embodiments, an example in which it is considered that the faulty energy storage valve submodule fails to be bypassed if the power switch apparatus connected in parallel with the bypass switch and the bypass switch both fail to implement the bypass (that is, four-level protection) is used for description. In a case where the energy storage valve submodule has a fault, the power switch apparatus connected in parallel with the bypass switch is first controlled, and in a case where the power switch apparatus fails to be turned on, the bypass switch is then controlled to be closed, thereby achieving the removal control of the faulty energy storage valve submodule. It can be understood that in other embodiments, in a case where the energy storage valve submodule has a fault, the bypass switch can be first controlled to be closed, and in a case where the bypass switch fails to be closed, the power switch apparatus connected in parallel with the bypass switch is then controlled to be turned on, thereby achieving the removal control of the faulty energy storage valve submodule.

In the above solution, in a case where the energy storage valve has a faulty energy storage valve submodule, the power switch apparatus connected in parallel with the bypass switch is first controlled to be turned on to bypass the faulty energy storage valve submodule; if the power switch apparatus fails to be turned on, the bypass switch is controlled to be closed to bypass the faulty energy storage valve submodule, and in a case where the bypass switch also fails to implement the bypass, the breakover thyristor is enabled for bypass. In this way, multi-level guarantee can be provided for the bypass of the energy storage valve submodule, increasing the bypass success rate of the energy storage valve submodule.

Referring to FIG. 6, in some embodiments, after Step 502, the method further includes Step 602.

Step 602: Control the energy storage valve to operate in a case where the power switch apparatus is successfully turned on.

When the energy storage valve submodule has a fault, after the energy storage valve control apparatus sends a turn-on signal to the switch apparatus connected in parallel with the bypass switch in the faulty energy storage valve submodule, a turn-on state of the power switch apparatus is monitored in real time. If the power switch apparatus is turned on, it indicates that the faulty energy storage valve submodule has been removed from the energy storage valve; and if the power switch apparatus fails to be turned on, it indicates that the faulty energy storage valve submodule is still connected to the energy storage valve for operation. In a case where the faulty energy storage valve submodule has been removed from the energy storage valve, the faulty energy storage valve submodule does not affect the operation of the energy storage valve, and in this case, only the energy storage valve needs to controlled to operate, that is, the energy storage valve is controlled to maintain operating in a current state.

In the above solution, if the power switch apparatus of the faulty energy storage valve submodule is successfully turned on, the bypass of the faulty energy storage valve submodule can be achieved, without needing to control the closing of the bypass switch, effectively improving the removal efficiency of the faulty energy storage valve submodule.

Referring to FIG. 6, in some embodiments, after Step 504, the method further includes Step 604.

Step 604: Control the energy storage valve to operate in a case where the bypass switch is closed successfully.

In a case where the energy storage valve control apparatus fails to control the power switch apparatus connected in parallel with the bypass switch in the faulty energy storage valve submodule to be turned on, a closing signal is issued to the bypass switch, and an opening/closing state of the bypass switch is monitored in real time. If the bypass switch is closed, it indicates that the faulty energy storage valve submodule has been removed from the energy storage valve; and if the bypass switch is not closed, it indicates that the faulty energy storage valve submodule is still connected to the energy storage valve for operation. In a case where the faulty energy storage valve submodule has been removed from the energy storage valve, the faulty energy storage valve submodule does not affect the operation of the energy storage valve. In this case, only the energy storage valve needs to be controlled to operate, that is, the energy storage valve is controlled to maintain operating in a current state.

In the above solution, if the bypass switch of the faulty energy storage valve submodule is closed successfully, the bypass of the faulty energy storage valve submodule can be achieved, without needing to control the opening of the switch apparatus, effectively improving the removal efficiency of the faulty energy storage valve submodule.

In some embodiments, the controlling a power switch apparatus connected in parallel with the bypass switch in the power module of the faulty energy storage valve submodule to be turned on includes: controlling a submodule control board and/or a power switch drive board of the faulty energy storage valve submodule to send a turn-on signal to the power switch apparatus connected in parallel with the bypass switch.

In the solution of these embodiments, the energy storage valve submodule further includes a submodule control board, a power switch drive board, and a bypass switch drive board. The submodule control board is in communication connection with the energy storage valve control apparatus, and is configured to receive related control instructions sent by the energy storage valve control apparatus and feed operation-related information back to the energy storage valve control apparatus. The power switch drive board and the bypass switch drive board are respectively in communication connection with the submodule control board.

After the energy storage valve control apparatus detects that the energy storage valve submodule has a fault, the energy storage valve control apparatus communicates with the submodule control board of the faulty energy storage valve submodule and issues a turn-on instruction to the submodule control board, and the submodule control board can further send the turn-on instruction to the power switch drive board. After receiving the turn-on instruction, the submodule control board can directly generate a turn-on signal according to the turn-on instruction and send the turn-on signal to the power switch apparatus to control the power switch apparatus to be turned on. Similarly, the power switch drive board can generate a turn-on signal according to the turn-on instruction and send the turn-on signal to the power switch apparatus to control the power switch apparatus to be turned on.

Therefore, in actual operating scenarios, as required, the submodule control board can be selected to send a turn-on signal to the power switch apparatus to control the power switch apparatus to be turned on; and/or, the power switch drive board can be selected to send a turn-on signal to the power switch apparatus to control the power switch apparatus to be turned on. In some embodiments, the submodule control board and the power switch drive board both send turn-on signals to the power switch apparatus, achieving redundant turn-on control of the power switch apparatus, thereby increasing the turn-on success rate of the power switch apparatus.

It can be understood that the submodule control board and the power switch drive board both sending turn-on signals to the power switch apparatus may specifically mean that the submodule control board and the power switch drive board may simultaneously send turn-on signals; alternatively, the submodule control board sends the turn-on signal first, and if the power switch apparatus is not turned on, the power switch drive board then sends the turn-on signal; and alternatively, the power switch drive board sends the turn-on signal first, and if the power switch apparatus is not turned on, the submodule control board then sends the turn-on signal. This is not specifically limited.

In the above solution, the power switch apparatus can be turned on under the control of the submodule control board and/or the power switch drive board, effectively increasing the turn-on success rate of the power switch apparatus.

In some embodiments, the controlling the bypass switch to be closed includes: controlling the submodule control board and/or bypass switch drive board of the faulty energy storage valve submodule to send a closing signal to the bypass switch.

Similar to the turn-on control of the power switch apparatus in the above embodiments, the closing control of the bypass switch can also be issued by the submodule control board and/or the bypass switch drive board, which may be selected according to actual needs. In some embodiments, when the submodule control board and the bypass switch drive board both issue turn-on signals, the turn-on signals may be also issued simultaneously or sequentially. Details are not described again.

In the above solution, the bypass switch can be turned on under the control of the submodule control board and/or the bypass switch drive board, effectively increasing the closing success rate of the bypass switch.

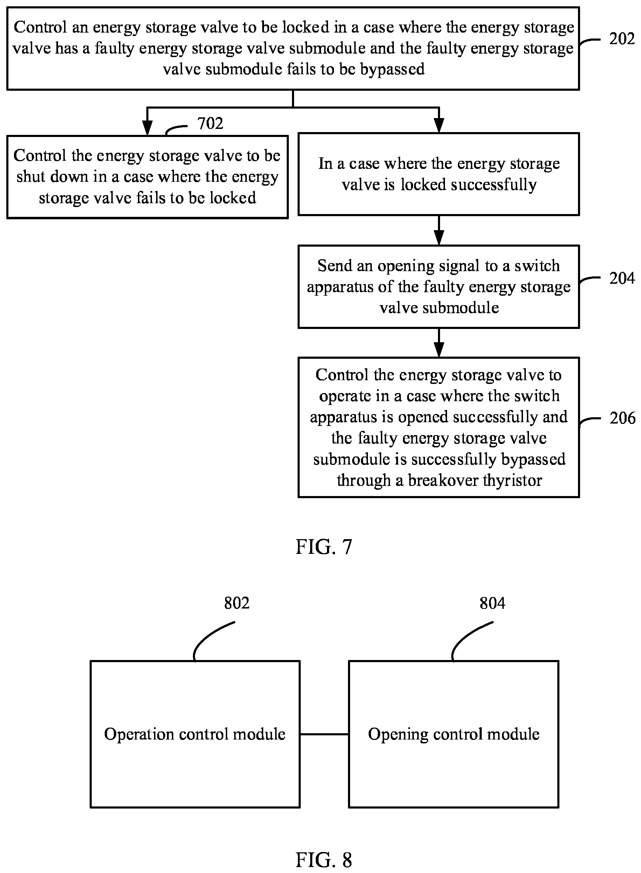

In some embodiments, referring to FIG. 7, after Step 202, the method further includes Step 702.

Step 702: Control the energy storage valve to be shut down in a case where the energy storage valve fails to be locked.

Execute Step 204 in a case where the energy storage valve is locked successfully.

As shown above, the locking of the energy storage valve means that the current flowing through the energy storage valve is reduced to zero, so that the switch apparatus meets an operating condition. In the solution of these embodiments, after the energy storage valve control apparatus controls the energy storage valve to perform the locking action, whether the energy storage valve is locked successfully needs to be monitored in real time, and in a case where the energy storage valve is locked successfully, the step of sending an opening signal to the switch apparatus of the faulty energy storage valve submodule is executed again. While in a case where the energy storage valve is not locked successfully, the energy storage valve is controlled to be shut down, reducing the possibility of greater safety hazards caused by continued operation of the energy storage valve.

It can be understood that the manner in which the energy storage valve control apparatus determines whether the energy storage valve is locked successfully is not unique. In some embodiments, a current detector may be provided in the energy storage valve, and the current detector is in communication connection with the energy storage valve control apparatus. After the energy storage valve control apparatus issues a locking control signal to the energy storage valve, a current value collected and sent by the current detector is received in real time, and if the current value changes to zero within a specific time, it is considered that the energy storage valve is locked successfully; and if the current value does not change to zero within a specific time, it is considered that the energy storage valve fails to be locked. In other embodiments, whether the energy storage valve is locked successfully may be detected in other manners, for example, in a manner of detecting whether output power of the energy storage valve is zero. This is not specifically limited.

In the above solution, after the energy storage valve is controlled to be locked, it is further necessary to detect whether the energy storage valve is locked successfully, and in a case where the energy storage valve is locked successfully, the opening control of the switch apparatus is executed, improving the opening reliability of the switch apparatus.

To facilitate understanding of the technical solution of this application, this application is explained below in combination with detailed embodiments.

In each cascaded energy storage valve submodule in the energy storage valve, each bypass switch is connected in parallel with a breakover thyristor, and the power module is connected to the energy storage module through the switch apparatus. When the energy storage valve is connected to the energy storage system for operation, the energy storage valve control apparatus performs fault monitoring for each energy storage valve submodule in real time, and in a case where a faulty energy storage valve submodule is monitored, the energy storage valve control apparatus first sends a turn-on instruction related to turn-on of the power switch apparatus to the submodule control board of the faulty energy storage valve submodule, the submodule control board sends the turn-on instruction to the power switch drive board, and then the submodule control board and the power switch drive board simultaneously send turn-on signals to the power switch apparatus connected in parallel with the bypass switch. The energy storage valve control apparatus monitors whether the power switch apparatus is turned on successfully according to signals fed back by the submodule control board or the power switch drive board. If the power switch apparatus is turned on successfully, it indicates that the faulty energy storage valve submodule has been bypassed and removed for protection, and in this case, the energy storage valve can be controlled to continue operating. If the power switch apparatus is not turned on successfully, a next level of protection action may be executed for the faulty energy storage valve submodule.

Similarly, in this level of fault protection, the energy storage valve control apparatus sends a closing instruction related to closing of the bypass switch to the submodule control board of the faulty energy storage valve submodule, the submodule control board sends the closing instruction to the bypass switch drive board, and then the submodule control board and the bypass switch drive board simultaneously send closing signals to the bypass switch. The energy storage valve control apparatus monitors whether the bypass switch apparatus is closed successfully according to signals fed back by the submodule control board or the power switch drive board. If the bypass switch apparatus is closed successfully, it indicates that the faulty energy storage valve submodule has been bypassed and removed for protection, and in this case, the energy storage valve can be controlled to continue operating. If the bypass switch apparatus is not closed successfully, it is necessary to control the energy storage valve to be locked, and within a specific time after a locking-related signal is outputted, if the energy storage valve control apparatus has monitored that the current across the two terminals of the energy storage valve drops to zero, it is determined that the energy storage valve is locked successfully, and the next level of protection action is executed for the faulty energy storage valve submodule; if the energy storage valve control apparatus has monitored that the current across the two terminals of the energy storage valve does not drop to zero, it is determined that the energy storage valve fails to be locked.

In this level of protection for the faulty energy storage valve submodule after the energy storage valve is locked successfully, the energy storage valve control apparatus sends an opening instruction related to opening of the switch apparatus to the submodule control board of the faulty energy storage valve submodule, and the submodule control board generates an opening signal according to the opening instruction and sends the opening signal to the switch apparatus. Then, the energy storage valve control apparatus monitors whether the switch apparatus is opened successfully according to information fed back by the submodule control board, and further monitors whether the breakover thyristor is broken down (which can be achieved by monitoring a negative voltage or current of the breakover thyristor) in a case where the switch apparatus is opened successfully. If the breakover thyristor is broken down under the action of the voltage across the two terminals of the capacitor, it indicates that the faulty energy storage valve submodule has been bypassed and removed for protection, and in this case, the energy storage valve can be controlled to be unlocked and to enter an operating state to continue operating.

If the switch apparatus is not opened successfully, or the breakover thyristor is not broken down successfully, the energy storage valve control apparatus enters the last level of protection. In this case, the energy storage valve control apparatus controls the energy storage valve where the faulty energy storage valve submodule is located to stop operating and to be put into operation again after the fault is subsequently eliminated, reducing the risk of further expansion of the fault and improving the operation reliability of the energy storage valve.

It should be understood that although the various steps in the flowcharts involved in the embodiments described above are sequentially shown as indicated by the arrows, these steps are not necessarily executed in the order as indicated by the arrows. Unless explicitly stated herein, the order for executing these steps is not strictly limited, and these steps can be executed in other orders. Moreover, at least some steps in the flowcharts involved in the embodiments described above may include multiple steps or multiple stages, these steps or stages are not necessarily executed and completed at the same moment and can be executed at different moments, and these steps or stages are not necessarily executed sequentially and can be executed in turn or alternately with at least some other steps or steps or stages in other steps.

Based on the same inventive concept, an embodiment of this application further provides an energy storage valve operation control apparatus for implementing the energy storage valve operation control method involved above. The implementation solution provided by the apparatus for solving the problem is similar to the implementation solution described in the above method, so the specific limitations in one or more embodiments of the energy storage valve operation control apparatus provided below can refer to the limitations on the energy storage valve operation control method described above. Details are not described again herein.

Referring to FIG. 8, this application further provides an energy storage valve operation control apparatus, including: an operation control module 802 and an opening control module 804.

The operation control module 802 is configured to control an energy storage valve to be locked in a case where the energy storage valve has a faulty energy storage valve submodule and the faulty energy storage valve submodule fails to be bypassed; the opening control module 804 is configured to send an opening signal to a switch apparatus of the faulty energy storage valve submodule; and the operation control module 802 is further configured to control the energy storage valve to operate in a case where the switch apparatus is opened successfully and accordingly the faulty energy storage valve submodule is successfully bypassed through the breakover thyristor.

In some embodiments, the operation control module 802 is further configured to control the energy storage valve to be shut down in a case where the switch apparatus fails to be opened.

In some embodiments, the operation control module 802 is further configured to control the energy storage valve to be shut down in a case where the switch apparatus is opened successfully and the faulty energy storage valve submodule fails to be successfully bypassed through the breakover thyristor.

In some embodiments, the operation control module 802 is further configured to control a power switch apparatus connected in parallel with a bypass switch in a power module of the faulty energy storage valve submodule to be turned on in a case where the energy storage valve has a faulty energy storage valve submodule, to control the bypass switch to be closed in a case where the power switch apparatus fails to be turned on, and to control the energy storage valve to be locked in a case where the bypass switch fails to be closed.

In some embodiments, the operation control module 802 is further configured to control the energy storage valve to operate in a case where the power switch apparatus is turned on successfully.

In some embodiments, the operation control module 802 is further configured to control the energy storage valve to operate in a case where the bypass switch is closed successfully.

The various modules in the above energy storage valve operation control apparatus may be implemented entirely or partially through software, hardware, and combinations thereof. The above modules may be embedded in or independent of a processor in a computer device in hardware form, or stored in a memory in a computer device in software form, so that the processor calls and executes the operations corresponding to the above various modules.

In the above energy storage valve operation control apparatus, a breakover thyristor is connected in parallel with the bypass switch of the power module of the energy storage valve submodule in the energy storage valve, and the power module is connected to the energy storage valve module through the switch apparatus. In a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus is controlled to be opened successfully, so that a capacitor of the power module withstands a high voltage, changing a working state of the breakover thyristor, thereby enabling the faulty energy storage valve submodule to be successfully bypassed through the breakover thyristor, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor to protect the faulty energy storage valve submodule, without directly shutting down the entire energy storage valve. In this way, when there is a faulty energy storage valve submodule, the possibility of failure of bypass protection for the faulty energy storage valve submodule can be greatly reduced, the phenomenon of shutdown of the entire energy storage valve can be alleviated, and the operation reliability of the energy storage system can be effectively improved.

Referring to FIG. 1, this application further provides an energy storage valve submodule, including a controller (not shown in the figure), a power module 101, an energy storage module 105, and a switch apparatus 103. The power module 101 includes a capacitor C, a bypass switch K, a breakover thyristor D, as well as a first power switch apparatus T1 and a second power switch apparatus T2 connected in series. The bypass switch K is connected in parallel with the first power switch apparatus T1. The breakover thyristor D is connected in parallel with the bypass switch K. Two terminals of the breakover thyristor D are respectively cascaded with adjacent energy storage valve submodules. A terminal of the first power switch apparatus T1 away from the second power switch apparatus T2 is connected to a first terminal of the capacitor C. A terminal of the second power switch apparatus T2 away from the first power switch apparatus T1 is connected to a second terminal of the capacitor C. The first terminal and the second terminal of the capacitor C are respectively connected to the energy storage module 105 through the switch apparatus 103. The controller is configured to control the switch apparatus 103 to be opened in a case where the energy storage valve submodule has a fault and the faulty energy storage valve submodule fails to be bypassed, to make the faulty energy storage valve submodule be bypassed through the breakover thyristor D.

A specific protection solution of the energy storage valve submodule with a fault is as shown in the above embodiments, and details are not described herein again. The controller may be a submodule control board in the energy storage valve submodule, or a submodule control board, a power switch drive board, or a bypass switch drive board including the energy storage valve submodule. The specific types of the first power switch apparatus T1 and the second power switch apparatus T2 are not unique. In some embodiments, they have the same structure and may include a power switch tube and a diode connected in parallel with the power switch tube in a reverse direction. The power switch tube may be a transistor, a field effect transistor, an IGBT (insulated gate bipolar transistor), or the like. This is not specifically limited.

In the above energy storage valve submodule, in a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus 103 is controlled to be opened successfully, so that the capacitor C of the power module 101 withstands a high voltage, changing a working state of the breakover thyristor D, thereby enabling the faulty energy storage valve submodule to be successfully bypassed through the breakover thyristor D, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor D to protect the energy storage valve submodule, thereby improving the operating safety of the energy storage valve submodule.

In some embodiments, the switch apparatus 103 includes a drive assembly, a first switch assembly, and a second switch assembly. The drive assembly is configured to drive the first switch assembly and the second switch assembly. The first terminal of the capacitor C is connected to the energy storage module 105 through the first switch assembly, and the second terminal of the capacitor C is connected to the energy storage module 105 through the second switch assembly.

The controller includes a submodule control board, a power switch drive board, and a bypass switch drive board. The submodule control board is respectively in communication connection with the energy storage valve control apparatus, the power switch drive board, and the bypass switch drive board to construct a control system to control operation such as switching of the energy storage valve submodule. In the solution of these embodiments, the drive assembly is in communication connection with the submodule control board, and is configured to drive the first switch assembly and the second switch assembly to operate under the control of the submodule control board. In a case where the submodule control board sends an opening signal, the drive assembly drives the first switch assembly and the second switch assembly to be opened simultaneously; and in a case where the submodule control board sends a closing signal, the drive assembly drives the first switch assembly and the second switch assembly to be closed simultaneously.

It should be noted that the specific type of the switch apparatus 103 is not unique. In some embodiments, the switch apparatus 103 includes a disconnect switch. The disconnect switch can not only achieve isolation between the power module 101 and the energy storage module 105 but also provide an electrical isolation point for maintenance.

In the above solution, a double-switch type switch apparatus 103 is provided between the power module 101 and the energy storage module 105, which can achieve reliable isolation between the power module 101 and the energy storage module 105, thereby effectively reducing the implementation cost of bypass protection for the energy storage valve submodule.

It can be understood that in other embodiments, the switch apparatus 103 may alternatively be a type of switch apparatus which uses a single drive assembly to drive a single switch assembly. Correspondingly, in this case, two switch apparatuses 103 need to be provided between the power module 101 and the energy storage module 105 to achieve reliable isolation between the power module 101 and the energy storage module 105.

This application further provides an energy storage valve, including an energy storage valve control apparatus and the above cascaded energy storage valve submodules, where a controller of each energy storage valve submodule is connected to the energy storage valve control apparatus.

The energy storage valve submodule is as shown in the above embodiments and drawings, and details are not described herein again. The energy storage valve operation control method of the above embodiments is executed by the energy storage valve control apparatus, and the controller (that is, the submodule control board) of each energy storage valve submodule is in communication connection with the energy storage valve control apparatus. The control actions of the energy storage valve control apparatus on the energy storage valve submodules are all executed by sending control signals to the controller, and are then further executed by the controller.

In the energy storage valve, a breakover thyristor D is connected in parallel with the bypass switch K of the power module 101 of each cascaded energy storage valve submodule, and the power module 101 is connected to the energy storage valve module through the switch apparatus 103. In a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus 103 is controlled to be opened successfully, the capacitor C of the power module 101 withstands a high voltage, changing a working state of the breakover thyristor D, thereby enabling the faulty energy storage valve submodule to be successfully bypassed through the breakover thyristor D, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor D to protect the energy storage valve submodule, thereby improving the operating safety of the energy storage valve submodule.

This application further provides an energy storage system, including a converter valve and the above energy storage valve.

The energy storage valve is as shown in the above embodiments and drawings, and details are not described herein again. The energy storage system may be a high-voltage direct-current direct-hung energy storage system or the like, which is not specifically limited. In the energy storage valve, a breakover thyristor D is connected in parallel with the bypass switch K of the power module 101 of each cascaded energy storage valve submodule, and the power module 101 is connected to the energy storage valve module through the switch apparatus 103. In a case where a fault occurs in the energy storage valve submodule in the energy storage valve, if the faulty energy storage valve submodule fails to be bypassed, the energy storage valve is controlled to be locked first, making the current of the energy storage valve be zero, and further, the switch apparatus 103 is controlled to be opened successfully, the capacitor C of the power module 101 withstands a high voltage, changing a working state of the breakover thyristor D, thereby enabling the faulty energy storage valve submodule to be successfully bypassed through the breakover thyristor D, and controlling the energy storage valve to exit the locked state and enter an operating state. In the above solution, in a case where the faulty energy storage valve submodule fails to be bypassed, the bypass of the faulty energy storage valve submodule can be further achieved through the breakover thyristor D to protect the energy storage valve submodule, thereby improving the operating safety of the energy storage valve submodule.

In conclusion, it should be noted that: the above embodiments are only used to illustrate the technical solutions of this application rather than to limit them. Although this application has been described in detail with reference to the foregoing embodiments, those of ordinary skill in the art should understand that: modifications can still be made to the technical solutions recorded in the foregoing embodiments, or equivalent replacements can be made to some or all of the technical features therein. These modifications or replacements do not make the essence of the corresponding technical solutions depart from the scope of the technical solutions of the embodiments of this application, and they should all be covered within the scope of the claims and specification of this application. In particular, as long as there is no structural conflict, the various technical features mentioned in the various embodiments can be combined in any manner. This application is not limited to the specific embodiments disclosed in the text, but includes all technical solutions falling within the scope of the claims.

## Claims

1. An energy storage valve operation control method, comprising:
controlling an energy storage valve to be locked in a case where the energy storage valve has a faulty energy storage valve submodule and the faulty energy storage valve submodule fails to be bypassed;
sending an opening signal to a switch apparatus of the faulty energy storage valve submodule, wherein a capacitor of a power module of the faulty energy storage valve submodule is connected to an energy storage module of the faulty energy storage valve submodule through the switch apparatus; and
controlling the energy storage valve to operate in a case where the switch apparatus is opened successfully and the faulty energy storage valve submodule is successfully bypassed through a breakover thyristor, wherein the breakover thyristor is connected in parallel with a bypass switch of the power module.

2. The energy storage valve operation control method according to claim 1, wherein the controlling the energy storage valve to operate in a case where the faulty energy storage valve submodule is successfully bypassed through a breakover thyristor comprises:
controlling the energy storage valve to operate in a case where the breakover thyristor of the faulty energy storage valve submodule is passively broken down.

3. The energy storage valve operation control method according to claim 2, wherein the passive breakdown of the breakover thyristor of the faulty energy storage valve submodule comprises:
acquiring a voltage parameter across two terminals of the breakover thyristor of the faulty energy storage valve submodule in a case where the switch apparatus is opened;
determining that the breakover thyristor is passively broken down in a case where the voltage parameter changes to zero within a preset duration; and
determining that the breakover thyristor is not passively broken down in a case where the voltage parameter does not change to zero within the preset duration.

4. The energy storage valve operation control method according to any one of claims 1 to 3, wherein after the controlling an energy storage valve to be locked in a case where the energy storage valve has a faulty energy storage valve submodule and the faulty energy storage valve submodule fails to be bypassed, the method further comprises:
executing the step of sending an opening signal to a switch apparatus of the faulty energy storage valve submodule in a case where the energy storage valve is locked successfully; and
controlling the energy storage valve to be shut down in a case where the energy storage valve fails to be locked.

5. The energy storage valve operation control method according to any one of claims 1 to 4, wherein after the sending an opening signal to a switch apparatus of the faulty energy storage valve submodule, the method further comprises:
controlling the energy storage valve to be shut down in a case where the switch apparatus is opened successfully and the faulty energy storage valve submodule fails to be successfully bypassed through the breakover thyristor.

6. The energy storage valve operation control method according to any one of claims 1 to 5, wherein after the sending an opening signal to a switch apparatus of the faulty energy storage valve submodule, the method further comprises:
controlling the energy storage valve to be shut down in a case where the switch apparatus fails to be opened.

7. The energy storage valve operation control method according to any one of claims 1 to 6, wherein the controlling an energy storage valve to be locked in a case where the energy storage valve has a faulty energy storage valve submodule and the faulty energy storage valve submodule fails to be bypassed comprises:
controlling a power switch apparatus connected in parallel with the bypass switch in the power module of the faulty energy storage valve submodule to be turned on in a case where the energy storage valve has a faulty energy storage valve submodule;
controlling the bypass switch to be closed in a case where the power switch apparatus fails to be turned on; and
controlling the energy storage valve to be locked in a case where the bypass switch fails to be closed.

8. An energy storage valve operation control apparatus, comprising:
an operation control module, configured to control an energy storage valve to be locked in a case where the energy storage valve has a faulty energy storage valve submodule and the faulty energy storage valve submodule fails to be bypassed; and
an opening control module, configured to send an opening signal to a switch apparatus of the faulty energy storage valve submodule, wherein a capacitor of a power module of the faulty energy storage valve submodule is connected to an energy storage module of the faulty energy storage valve submodule through the switch apparatus; wherein
the operation control module is further configured to control the energy storage valve to operate in a case where the switch apparatus is opened successfully and the faulty energy storage valve submodule is successfully bypassed through a breakover thyristor, wherein the breakover thyristor is connected in parallel with a bypass switch of the power module.

9. An energy storage valve submodule, comprising: a controller, a power module, an energy storage module, and a switch apparatus, wherein the power module comprises a capacitor, a bypass switch, a breakover thyristor, as well as a first power switch apparatus and a second power switch apparatus connected in series; wherein
the bypass switch is connected in parallel with the first power switch apparatus, the breakover thyristor is connected in parallel with the bypass switch, two terminals of the breakover thyristor are respectively cascaded with adjacent energy storage valve submodules, a terminal of the first power switch apparatus away from the second power switch apparatus is connected to a first terminal of the capacitor, a terminal of the second power switch apparatus away from the first power switch apparatus is connected to a second terminal of the capacitor, the first terminal and the second terminal of the capacitor are respectively connected to the energy storage module through the switch apparatus, and the first power switch apparatus, the bypass switch, and the switch apparatus are respectively connected to the controller; and
the controller is configured to control the switch apparatus to be opened in a case where the energy storage valve submodule has a fault and the faulty energy storage valve submodule fails to be bypassed, to make the faulty energy storage valve submodule be bypassed through the breakover thyristor.

10. The energy storage valve submodule according to claim 9, wherein the switch apparatus comprises a drive assembly, a first switch assembly, and a second switch assembly, the drive assembly is respectively connected to the first switch assembly and the second switch assembly, the first terminal of the capacitor is connected to the energy storage module through the first switch assembly, and the second terminal of the capacitor is connected to the energy storage module through the second switch assembly.

11. An energy storage valve, comprising an energy storage valve control apparatus and the cascaded energy storage valve submodules according to claim 9 or 10, wherein a controller of each of the energy storage valve submodules is connected to the energy storage valve control apparatus.

12. An energy storage system, comprising a converter valve and the energy storage valve according to claim 11.
